# EUROPEAN PATENT APPLICATION

(11) **EP 1 737 196 A2**
(43) Date of publication of application: **27.12.2006**
(21) Application number: 06006582.8
(22) Date of filing: 29.03.2006
(51) Int. Cl.: H04L 29/12

(54) **IP address obtaining method**

(30) Priority: 24.06.2005 JP 2005185164
(71) Applicant: Olympus Corporation, Tokyo 151-0072 (JP)
(72) Inventor: Kumano, Takafumi, Fuchu-shi, Tokyo 183-0011 (JP); Sugawara, Jun, Fuchi-shi, Tokyo 183-0045 (JP)
(74) Representative: von Hellfeld, Axel

(57) **Abstract**

If a received packet is REQUEST, an IP address and a MAC address, which are stored in the REQUEST, are extracted. If the extracted MAC address is the MAC address of a network appliance (2) to be examined, the MAC address and the IP address extracted from the REQUEST are associated with and stored.

## Description

### Background of the Invention

### Field of the Invention

The present invention relates to a network system where a DHCP (Dynamic Host Configuration Protocol) server dynamically assigns an IP address to a network appliance via a network, and more particularly, to an IP address obtaining method thereof.

### Description of the Related Art

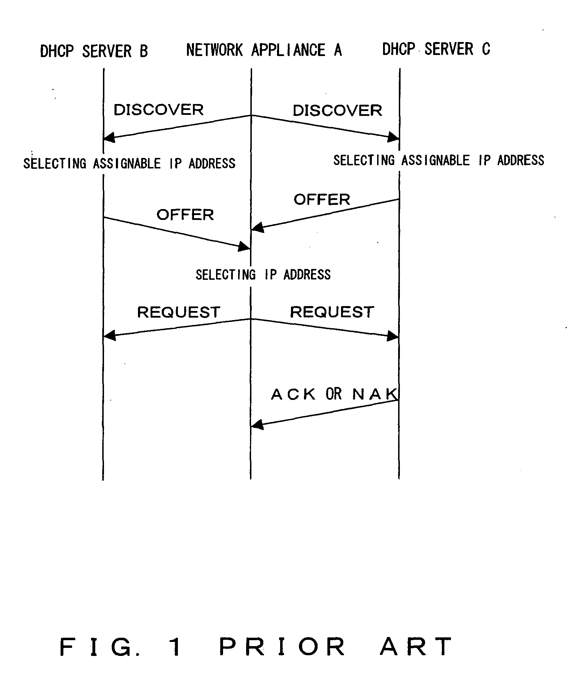

Fig. 1 shows a sequence for explaining procedures with which a DHCP server dynamically assigns an IP address. Here, assume that a plurality of network appliances and a plurality of DHCP servers are connected to a network such as Ethernet or the like, and the appliances and the servers can communicate with one another (for example, see non-patent document 1).

As shown in Fig. 1, a network appliance A, which attempts to obtain an IP address among the plurality of network appliances, broadcasts a DHCP message called DHCPDISCOVER (hereinafter referred to as DISCOVER) to the network.

Next, DHCP servers B and C, which receive the DISCOVER, respectively select an assignable IP address, and transmit to the network appliance A a DHCP message called DHCPOFFER (hereinafter referred to as OFFER) storing each of the selected IP addresses.

Upon receipt of the OFFERs transmitted from the DHCP servers B and C, the network appliance A extracts the IP address from each of the OFFERs, selects a suitable IP address, here the IP address assigned by the DHCP server C, and broadcasts to the network a DHCP message called DHCPREQUEST (hereinafter referred to as REQUEST) storing the selected IP address.

After verifying that the IP address stored in the REQUEST has not been assigned yet, the DHCP server C which received the REQUEST transmits to the network appliance A a DHCP message called ACK for permitting the use of the IP address. Here, the assignment of the IP address to the network appliance A is completed. If the IP address stored in the REQUEST has already been assigned, the DHCP server C transmits to the network appliance A a DHCP message called NAK for prohibiting the use of the IP address.

As described above, when a predetermined network appliance communicates with a plurality of other network appliances by using TCP/IP in a network environment where a DHCP server dynamically assigns an IP address, the predetermined network appliance must recognize the IP addresses of the other network appliances.

However, since an IP address is updated when its lease period expires or a network appliance is reconnected to a network, there arises a problem such that the predetermined network appliance cannot communicate with other network appliance if the IP address of the other network appliance is updated when communicating with the other network appliance.

Therefore, DHCP server's settings for preventing an IP address from being changed, the use of a host name instead of an IP address by adopting a protocol such as DNS (Domain Name System), which associates a host name with an IP address, the examination of an IP address used at the time of a communication by adopting RARP (Reverse Address Resolution Protocol), and the like are considered as a solution.

However, with the DHCP server's settings for preventing an IP address from being changed, if the number of network appliances increases, IP addresses must be prepared by that number, and it becomes meaningless to dynamically assign an IP address. Additionally, when DNS or RARP is adopted, a protocol different from DHCP must be prepared, leading to the complexity of the system.

Accordingly, a method for configuring information about the correspondence between an IP address and a MAC address in an ARP table by combining Ping (Packet InterNet Groper) and ARP (Address Resolution Protocol) is considered as a method for easily obtaining the information about the correspondence between an IP address and a MAC address.

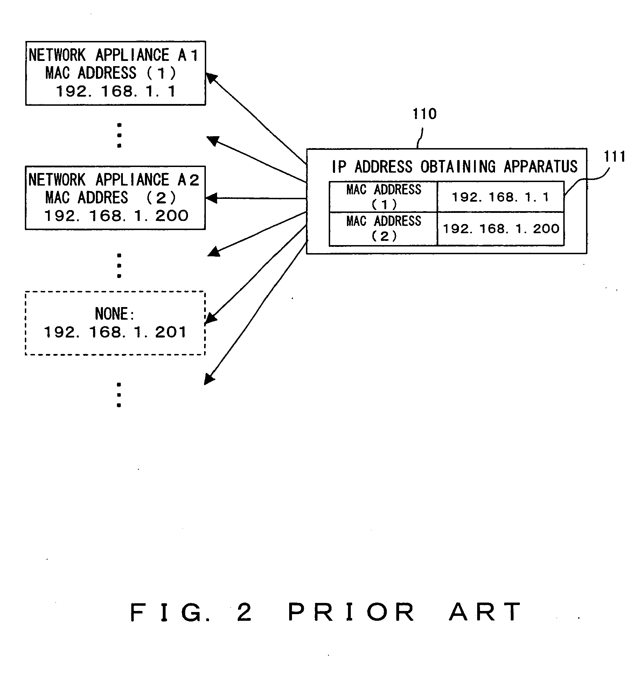

Fig. 2 explains the method for obtaining an IP address by combining Ping and ARP. Here, assume that a plurality of network appliances A1, A2, ..., and an IP address obtaining apparatus 110 are connected on a network.

This method uses a Ping capability for examining the number of network appliances to which a communication can be made on a network, and an ARP capability for automatically retrieving a MAC address from an IP address.

Firstly, the IP address obtaining apparatus 110 attempts to communicate with all of possibly existing network appliances by using Ping.

Then, the IP address obtaining apparatus 110 obtains an IP address stored in correspondence with the MAC address of a network appliance to which a communication can be made among the network appliances A1, A2, ... by using ARP with reference to a table 111 where an IP address and a MAC address are associated with and stored.

For example, the IP address obtaining apparatus 110 obtains from the table 111 the IP address, which corresponds to the MAC address "MAC address (2)" of the network appliance A2, to be "192.168.1.200". Thus, the IP address obtaining apparatus 110 can communicate with the network appliance A2 with the use of the obtained IP address "192.168.1.200" by using TCP/IP.

However, with the method for obtaining an IP address by combining Ping and ARP, attempts must be made to communicate with all of possibly existing network appliances as described above. For example, to obtain an IP address of a network appliance connected to a subnet, communications are made 255 times even if only one network appliance is running. Accordingly, there is a problem such that the method for obtaining an IP address by combining Ping and ARP requires a lot of time to complete the obtainment of an IP address, and imposes a heavy load on a network.
[non-patent document 1] "Dynamic Host Configuration Protocol" (standard specifications), Ralph Droms, Bucknell University, March 1997, Masahiro KIDO (Japanese translation)

### Summary of the Invention

It is an object of the present invention to provide a high-speed IP address obtaining method with which a load on a network can be reduced without using protocols other than DHCP.

To overcome the above described problems, the present invention adopts the following method.

Namely, the IP address obtaining method according to the present invention is an IP address obtaining method in a network system where a DHCP server dynamically assigns an IP address to a network appliance via a network. This method comprises: receiving a request message which is transmitted from the network appliance to the DHCP server and stores an IP address desired to be used; extracting the IP address and a MAC address from the request message; and associating a MAC address of a network appliance to be examined with the IP address extracted from the request message, and storing the MAC address and the IP address, if the extracted MAC address is the MAC address of the network appliance to be examined.

The IP address obtaining method may comprise: storing the MAC address of the network appliance to be examined in an application message indicating that an IP address is desired to be obtained, and transmitting the application message to the DHCP server, if the IP address stored in correspondence with the MAC address of the network appliance to be examined is not updated; receiving from the DHCP server a notification message storing an assigned IP address or an assignable IP address; extracting the assigned IP address or the assignable IP address from the notification message; and associating the MAC address of the network appliance to be examined with the IP address extracted from the notification message, and storing the MAC address and the IP address.

Or, the IP address obtaining method may further comprise: setting a broadcast flag stored in the application message to ON when transmitting the application message to the DHCP server; and receiving the notification message broadcast from the DHCP server.

Furthermore, the scope of the present invention covers an IP address obtaining apparatus, an IP address obtaining system, a storage medium, and a program.

### Brief Description of the Drawings

Fig. 1 shows a sequence for explaining DHCP communication procedures;
Fig. 2 explains a method for obtaining an IP address by combining Ping and ARP;
Fig. 3 shows an IP address obtaining system according to a preferred embodiment of the present invention;
Fig. 4 exemplifies an address management table;
Fig. 5 is a flowchart showing the operations of an IP address obtaining apparatus when an IP address is passively obtained;
Fig. 6 shows the structure of a packet used by DHCP;
Fig. 7A shows the destination of OFFER in response to DISCOVER in a case where a broadcast flag is not set to ON;
Fig. 7B shows the destination of OFFER in response to DISCOVER in a case where the broadcast flag is set to ON;
Fig. 8 is a flowchart showing the operations of an IP address obtaining apparatus when an IP address is actively obtained;
Fig. 9 is a flowchart showing the operations of the IP address obtaining apparatus when a communication is made with a network appliance to be examined;
Fig. 10 shows a configuration of an IP address obtaining system applied to a multi-projection system; and
Fig. 11 exemplifies an image projecting device management table.

### Description of the Preferred Embodiments

Preferred embodiments according to the present invention are described below with reference to the drawings.

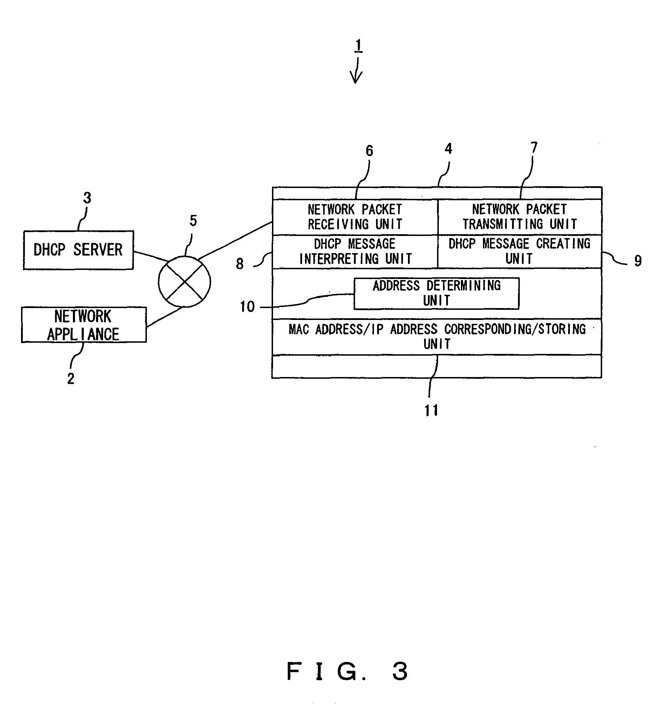

Fig. 3 shows an IP address obtaining system according to a preferred embodiment of the present invention.

The IP address obtaining system 1 shown in Fig. 3 is configured by comprising a network appliance 2, a DHCP server 3 which dynamically assigns an IP address to the network appliance 2, and an IP address obtaining apparatus 4 which communicates with the network appliance 2 by using TCP/IP. These constituent elements are connected to a network 5 such as Ethernet or the like. Note that two or more network appliances 2 and two or more DHCP servers 3 may be connected to the network 5.

The IP address obtaining apparatus 4 is configured by comprising a network packet receiving unit 6 for constantly receiving a packet on the network 5, a network packet transmitting unit 7, a DHCP message interpreting unit 8 for interpreting a DHCP message such as DISCOVER, OFFER and the like, a DHCP message creating unit 9 for creating a DHCP message such as DISCOVER and the like, an address determining unit 10 for determining whether or not a MAC address stored in OFFER, REQUEST or the like is the MAC address of a network appliance 2 to be examined (network appliance 2 for which a communication is desired to be established), and a MAC address/IP address corresponding/storing unit 11 for storing an address management table where a MAC address and an IP address are associated with and stored.

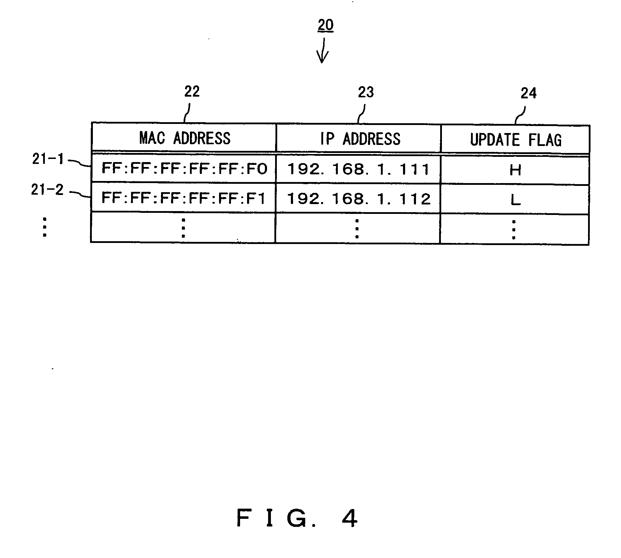

Fig. 4 exemplifies the address management table.

The address management table 20 shown in Fig. 4 is configured by a plurality of records 21 (21-1, 21-2, ...), each of which comprises a MAC address storing region 22 for storing a MAC address, an IP address storing region 23 for storing an IP address, and an update flag storing region 24 for storing a flag of high level (H) if an IP address is updated, or a flag of low level (L) if the IP address is not updated. In the example shown in Fig. 4, "FF:FF:FF:FF:FF:F0", "192.168.1.111", and "H" are respectively stored in the MAC address storing region 22, the IP address storing region 23, and the update flag storing region 24 of the record 21-1.

The IP address obtaining apparatus 4 according to this preferred embodiment is characterized in that a DHCP message transmitted/received between the network appliance 2 and the DHCP server 3 is monitored, and an IP address is obtained if the IP address corresponding to the network appliance 2 to be examined is stored in the DHCP message.

Namely, the network packet receiving unit 6 constantly receives a packet on the network 5. If a DHCP message is included in a received packet, the received DHCP message is transmitted to the DHCP message interpreting unit 8, and information included in the DHCP message is extracted. If an IP address and a MAC address are included in the extracted information, the MAC address is transmitted to the address determining unit 10, which then determines whether or not the transmitted address is the MAC address of the network appliance 2 to be examined. If the transmitted address is the MAC address of the network appliance 2 to be examined as a result of the determination, the extracted IP address is associated with the MAC address of the network appliance 2 to be examined, and stored in the MAC address/IP address corresponding/storing unit 11.

A passive IP address obtaining method, which is a fundamental IP address obtaining method of the IP address obtaining apparatus 4, is described next.

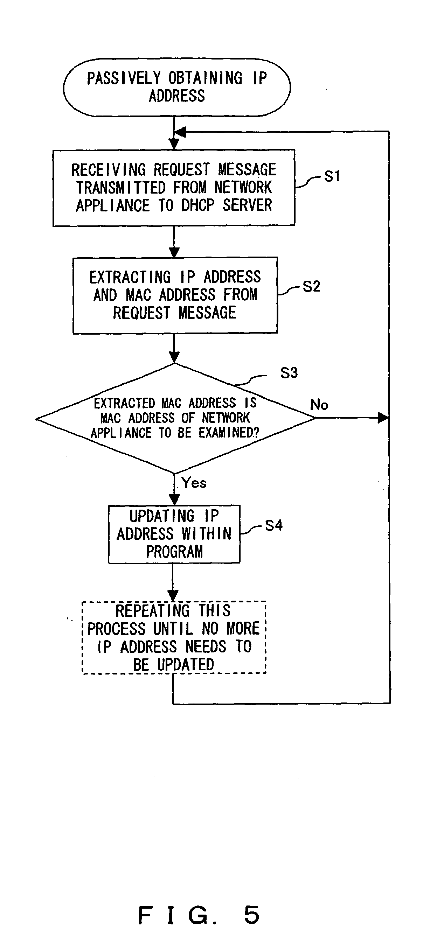

Fig. 5 is a flowchart showing the operations of the IP address obtaining apparatus 4 when an IP address is passively obtained.

Firstly, in step S1, the IP address obtaining apparatus 4 receives REQUEST (a request message storing an IP address desired to be used) transmitted from the network appliance 2 to the DHCP server 3 by means of the network packet receiving unit 6.

Next, in step S2, the IP address obtaining apparatus 4 extracts the IP address and a MAC address from the REQUEST. Specifically, the IP address obtaining apparatus 4 extracts the IP address and the MAC address, which are stored in the REQUEST, if information for identifying the type of a packet indicates REQUEST among packets received by the network packet receiving unit 6 connected to the network 5.

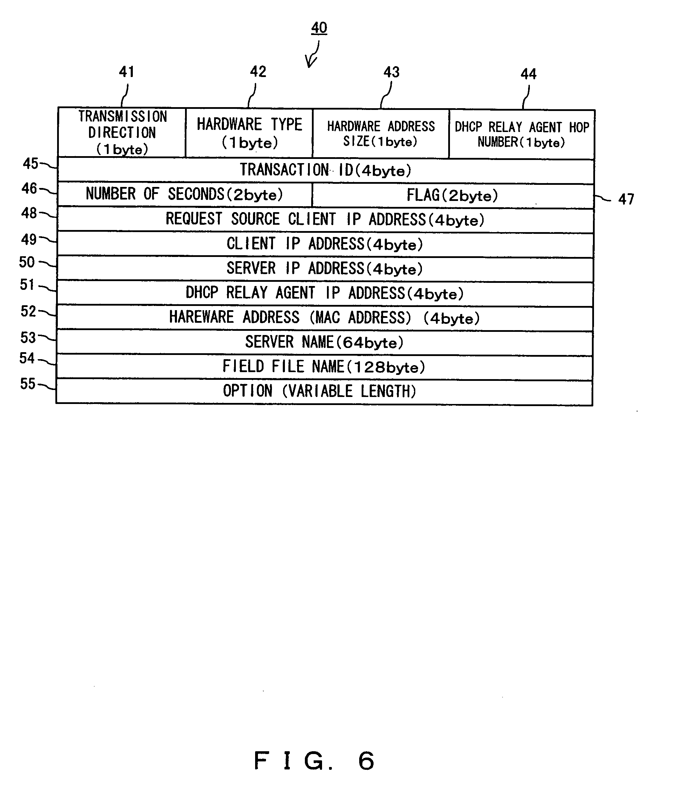

Fig. 6 shows the structure of a packet of a DHCP message.

The DHCP message 40 shown in Fig. 6 is configured by a transmission direction region 41, a hardware type region 42, a hardware address size region 43, a DHCP relay agent HOP number region 44, a transaction ID region 45, a second number region 46, a broadcast flag region 47, a request source client IP address region 48, a client IP address region 49, a server IP address region 50, a DHCP relay agent IP address region 51, a hardware address (MAC address) region 52, a server name region 53, a field file name region 54, an option region 55 storing information for identifying the type of a packet (information for identifying any of DISCOVER, REQUEST, OFFER, ACK, and NAK), and the like. In step S2, the IP address obtaining apparatus 4 extracts the IP address from the client IP address region 49 and also extracts the MAC address from the hardware address region 52, if the information stored in the option region 55 indicates REQUEST.

Next, in step S3 shown in Fig. 5, the IP address obtaining apparatus 4 determines by means of the address determining unit 10 whether or not the extracted MAC address is the MAC address of the network appliance 2 to be examined. For example, the IP address obtaining apparatus 4 determines whether or not the extracted MAC address matches any of MAC addresses of records 21 stored in the MAC address storing region 22 of the address management table 20 shown in Fig. 4. If the extracted MAC address matches any of the MAC addresses, it is determined that the MAC address extracted from the REQUEST is the MAC address of the network appliance 2 to be examined. If the extracted MAC address mismatches the MAC addresses, it is determined that the MAC address extracted from the REQUEST is not the MAC address of the network appliance 2 to be examined. Note that the MAC address and the IP address, which are extracted from the REQUEST, may be associated with and stored in a new record 21 if the MAC address that matches the MAC address stored in the REQUEST is not stored in the address management table 20 shown in Fig. 4.

If the MAC address extracted from the REQUEST is the MAC address of the network appliance 2 to be examined ("Yes" in step S3), the IP address obtaining apparatus 4 updates the IP address within a program to the IP address extracted from the REQUEST. Then, the process goes back to step S1. For example, if the MAC address extracted from the REQUEST matches the MAC address stored in the record 21-2 of the address management table 20 shown in Fig. 4, the IP address obtaining apparatus 4 updates the IP address stored in the record 21-2 to the IP address extracted from the REQUEST. Then, the process goes back to step S1.

In the meantime, if it is determined that the MAC address extracted from the REQUEST is not the MAC address of the network appliance 2 to be examined ("No" in step S3), the process goes back to step S1 without performing further operations. For example, if the MAC address extracted from the REQUEST mismatches the MAC addresses stored in all of the records 21 in the address management table 20 shown in Fig. 4, the process goes back to step S1 without performing further operations.

If the lease period of an IP address expires or a reconnection is made to the network 5, the network appliance 2 transmits DISCOVER to the DHCP server 3 in order to be assigned a new IP address. Since the IP address assigned to the network appliance 2 changes in a short time as described above, the IP address obtaining apparatus 4 continues to receive REQUEST and to obtain an IP address until an IP address does not need to be updated any more, for example, until the IP address obtaining apparatus 4 or all of network appliances 2 are powered off.

Note that the IP address obtaining apparatus 4 may determine whether or not to obtain an IP address based on the update flag stored in the update flag region 24 of the address management table 20 shown in Fig. 4. For example, if the update flags of all of the records 21 are "H", it is determined that an IP address does not need to be obtained. If any of the update flags of all of the records 21 is "L", it is determined that an IP address must be obtained for the MAC address corresponding to the record 21 the update flag of which is "L".

As described above, the IP address obtaining apparatus 4 can obtain an IP address, for example, when the lease period of an IP address expires or the network appliance 2 is powered on and connected to the network 5. Accordingly, the IP address obtaining apparatus 4 can passively obtain an IP address of the address management table at the timing when the IP address of the network appliance 2 is updated. In this way, the IP address obtaining apparatus 4 can obtain an IP address at the timing when an IP address is assigned to the network appliance 2 after the IP address obtaining apparatus 4 is powered on by an operator.

In the meantime, if an IP address is assigned to the network appliance 2 to be examined before the IP address obtaining apparatus 4 is powered on, the IP address cannot be obtained with the above described passive obtaining method. Therefore, the IP address obtaining apparatus 4 is configured to obtain also an already assigned IP address by obtaining an IP address not only passively but also actively. Also when an IP address is actively obtained as described above, DHCP messages are used.

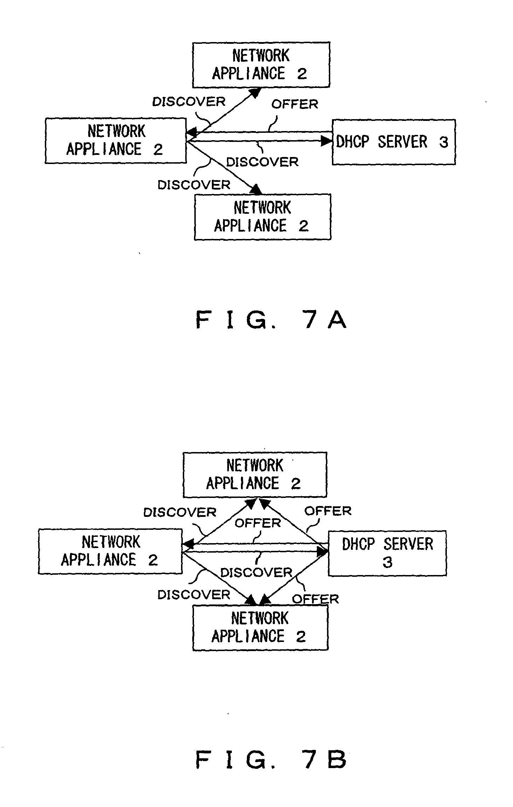

Fig. 7A shows the destination of OFFER in response to DISCOVER in a state where the broadcast flag is not set to ON, whereas Fig. 7B shows the destination of OFFER in response to DISCOVER in a state where the broadcast flag is set to ON.

As shown in Fig. 7A, upon receipt of DISCOVER in the state where the broadcast flag is not set to ON, the DHCP server 3 transmits OFFER only to the network appliance 2 which transmitted the DISCOVER.

In the meantime, as shown in Fig. 7B, upon receipt of DISCOVER in the state where the broadcast flag is set to ON, the DHCP server 3 broadcasts OFFER in response to the DISCOVER.

As described above, if DISCOVER in the state where the broadcast flag is set to ON is received by the DHCP server 3, OFFER in response to the DISCOVER is broadcast. By taking advantage of this operation, the IP address obtaining apparatus 4 actively obtains an IP address.

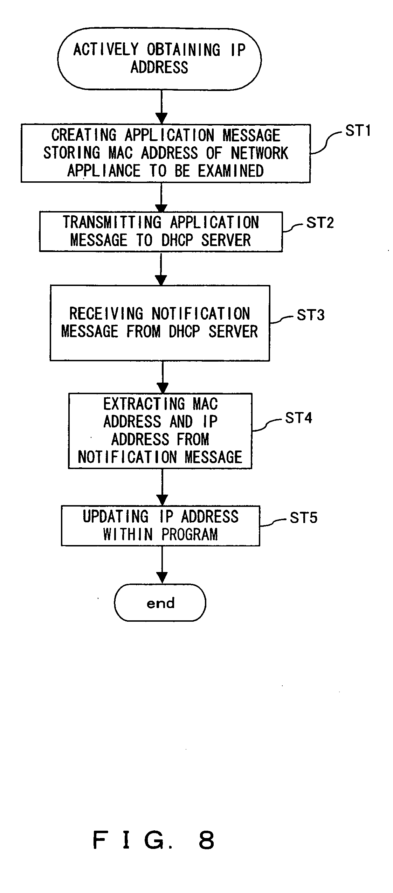

Fig. 8 is a flowchart showing the operations of the IP address obtaining apparatus 4 when an IP address is actively obtained.

Firstly, in step ST1, the IP address obtaining apparatus 4 creates DISCOVER (an application message indicating that an IP address is desired to be obtained) storing the MAC address of the network appliance 2 to be examined by means of the DHCP message creating unit 9. At this time, the IP address obtaining apparatus 4 sets the broadcast flag stored in the DISCOVER to ON. The timing when the DISCOVER is created is arbitrary. For example, the DISCOVER may be created at the timing instructed by an operator, or at predetermined time intervals. Also the method for selecting a MAC address stored when the DISCOVER is created is not particularly limited. For example, the DISCOVER may be created for a MAC address whose update flag of the update flag region 24 in the address management table 20 shown in Fig. 4 is "L', or the DISCOVER may be created sequentially for all of MAC addresses stored in the address management table 20 shown in Fig. 4.

Next, in step ST2, the IP address obtaining apparatus 4 transmits the created DISCOVER to the DHCP server 3.

Then, in step ST3, the IP address obtaining apparatus 4 receives OFFER (application message) by means of the network packet receiving unit 6. At this time, if an IP address is already assigned to the network appliance 2 to be examined, the assigned IP address is stored in the OFFER. If an IP address has not been assigned yet to the network appliance 2 to be examined, an assignable IP address is stored in the OFFER.

Next, in step ST4, the IP address obtaining apparatus 4 extracts the IP address and the MAC address from the OFFER.

Then, in step ST5, the IP address obtaining apparatus 4 updates the IP address within the program to the IP address extracted from the OFFER, and terminates the operation for actively obtaining the IP address.

As described above, the IP address obtaining apparatus 4 sets the broadcast flag of DISCOVER to ON and transmits the DISCOVER to the DHCP server 3, whereby the IP address obtaining apparatus 4 can receive OFFER storing an assigned IP address if the IP address has been already assigned to the network appliance 2 to be examined, or can receive OFFER storing an assignable IP address if an IP address has not been assigned yet to the network appliance 2 to be examined. In this way, the IP address obtaining apparatus 4 can extract from the OFFER the IP address corresponding to the network appliance 2 to be examined, whereby the IP address obtaining apparatus 4 can actively obtain the IP address corresponding to the network appliance 2 to be examined at arbitrary timing.

As described above, the IP address obtaining apparatus 4 according to this preferred embodiment can passively and actively obtain an IP address. Therefore, the IP address obtaining apparatus 4 can obtain the IP address corresponding to the network appliance 2 to be examined at arbitrary timing while automatically tracking the update of an IP address. As a result, an IP address stored in the MAC address/IP address corresponding/storing unit 11 can be constantly updated to the newest one. Additionally, with the method for obtaining an IP address by using Ping and ARP, a security capability provided on a network can possibly determine a communication behavior performed by using Ping as a virus. However, with the IP address obtaining method implemented by the IP address obtaining apparatus 4, the security capability never makes an erroneous determination. This is because a communication behavior for accessing all of network appliances is not performed unlike Ping. Besides, with the IP address obtaining method implemented by the IP address obtaining apparatus 4, the number of packets on the network 5 can be reduced. This is because a communication behavior for accessing all of network appliances is not performed unlike Ping. Furthermore, with the IP address obtaining method implemented by the IP address obtaining apparatus 4, an IP address can be passively and actively obtained at the moment when a fault which occurs on the network 5 is restored. Therefore, the state where an IP address is assigned can be immediately tracked. As a result, an IP address can be obtained at high speed without using protocols other than DHCP, and also a load on the network 5 can be reduced.

The IP address obtaining apparatus 4 according to the above described preferred embodiment is configured to passively and actively obtain the IP address of the network appliance 2 to be examined. However, the IP address obtaining apparatus 4 may be configured to only passively or actively obtain the IP address assigned to the network appliance 2 to be examined.

Operations of the IP address obtaining apparatus 4 when communicating with the network appliance 2 to be examined are described next.

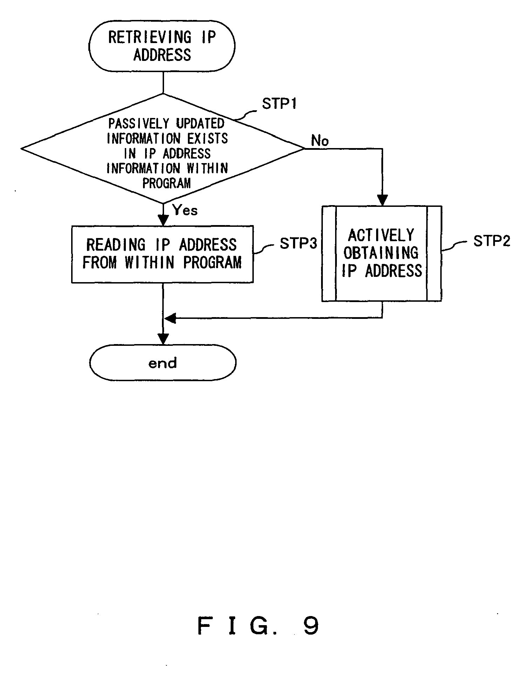

Fig. 9 is a flowchart showing the operations of the IP address obtaining apparatus 4 when the apparatus communicates with the network appliance 2 to be examined.

Firstly, in step STP1, the IP address obtaining apparatus 4 determines whether or not the IP address corresponding to the network appliance 2 with which the apparatus attempts to communicate is updated. For example, if the flag of the update flag region 24 in the record 21 corresponding to the network appliance 2 to be examined is "H" among the records 21 of the address management table 20 shown in Fig. 4, the apparatus determines that the IP address corresponding to that record 21 is updated. Or, if the flag of the update flag region 24 of the record 21 corresponding to the network appliance 2 to be examined is "L", the apparatus determines that the IP address corresponding to that record 21 is not updated.

If the apparatus determines that the IP address is not updated ("No" in step STP1), the IP address obtaining apparatus 4 actively obtains the IP address in step STP2. Since the operation performed in step STP2 is the same as that represented by the flowchart shown in Fig. 8, its explanation is omitted here.

In the meantime, if the apparatus determines that the IP address is updated ("Yes" in step STP1), the IP address obtaining apparatus 4 extracts the IP address from within the program in step STP3. For example, the IP address obtaining apparatus 4 extracts the IP address from the address management table stored in the MAC address/IP address corresponding/storing unit 11.

As a result, the IP address obtaining apparatus 4 can establish a communication with the network appliance 2 to be examined with the use of the extracted IP address by using TCP/IP.

A case where an IP address obtaining system 1 is applied to a multi-projection system is described next.

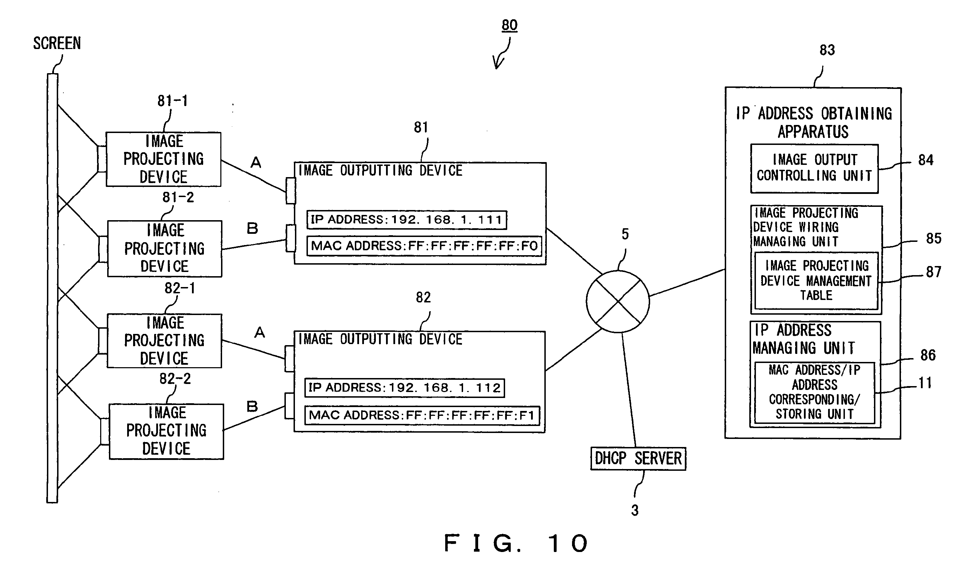

Fig. 10 shows a configuration in the case where the IP address obtaining system 1 is applied to the multi-projection system. The same constituent elements as those shown in Fig. 3 are denoted with the same reference numerals.

The multi-projection system 80 shown in Fig. 10 is configured by comprising image outputting devices 81 and 82 equivalent to the above described network appliances 2, a DHCP server 3, and an IP address obtaining apparatus 83 equivalent to the above described IP address obtaining apparatus 4. These constituent elements are connected to a network 5. Note that three or more image outputting devices 81 and 82 may be connected to the network 5.

The image outputting device 81 transmits an image to an image projecting device 81-1 via a channel A, or transmits an image to an image projecting device 81-2 via a channel B. Here, assume that the IP address and the MAC address of the image outputting device 81 are "192.168.1.111" and "FF:FF:FF:FF:FF:F0" respectively.

The image outputting device 82 transmits an image to an image projecting device 82-1 via a channel A, or transmits an image to an image projecting device 82-2 via a channel B. Here, assume that the IP address and the MAC address of the image outputting device 82 are "192.168.1.112" and "FF:FF:FF:FF:FF:F1" respectively.

The multi-projection system 80 shown in Fig. 10 displays one image on a screen by arranging the images projected by the image projecting devices 81-1, 81-2, 82-1, and 82-2 while making the images overlap.

The image outputting devices 81 and 82 may be configured to transmit an image to an image displaying device such as a display or the like via the channel A or B.

Examples of the image outputting device include an image converting device having various types of image conversion such as geometric correction, brightness correction (luminance correction), color correction and the like, an image reproducing device supported for an IP network (such as a DVD player), and an image recording/reproducing device supported for an IP network (such as a DVD recorder).

As the image projecting device, a transmissive liquid crystal projector, a reflective liquid crystal projector such as LCOS or the like, a DLP projector using a DMD element, an LED projector, a laser scan projector, a CRT projection display and the like can be applied.

As the image displaying device, an organic EL display, a plasma display, a CRT display, an SED display and the like can be applied.

The above described IP address obtaining apparatus 83 is configured by comprising an image output controlling unit 84, an image projecting device wiring managing unit 85, and an IP address managing unit 86.

The image output controlling unit 84 transmits an image and the like to the image outputting devices 81 and 82 via the network 5 by using TCP/IP.

The image projecting device wiring managing unit 85 stores an image projecting device management table 87 in which the MAC addresses of the image outputting devices 81 and 82 and image projecting device numbers for identifying the image projecting devices 81-1, 81-2, 82-1, and 82-2 are associated with and stored.

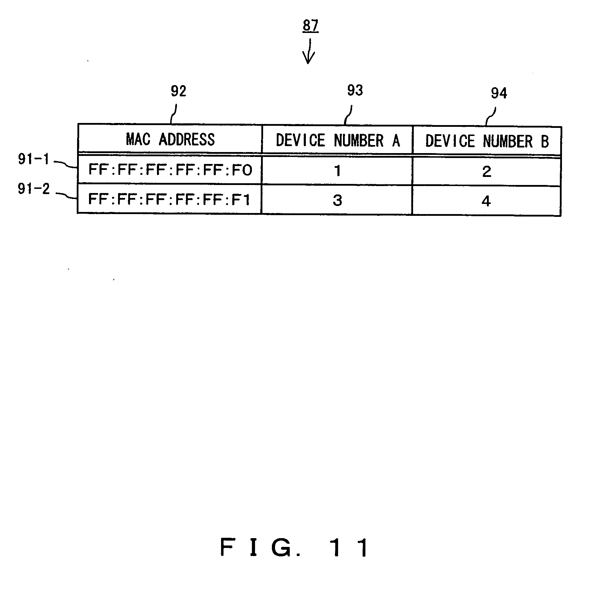

Fig. 11 exemplifies the image projecting device management table.

The image projecting device management table 82 shown in Fig. 11 is configured by a plurality of records 91 (91-1 and 92-2), each of which comprises a MAC address storing region 92 storing each of the MAC addresses of the image outputting devices 81 and 82, a device number A storing region 93 storing each of the image projecting device numbers of the image projecting devices 81-1 and 82-1 connected to the channel A, a device number B storing region 94 storing each of the image projecting device numbers of the image projecting devices 81-2 and 82-2 connected to the channel B. In the example shown in Fig. 11, "FF:FF:FF:FF:FF:F0", "1", and "2" are respectively stored in the MAC address storing region 92, the device number A storing region 93, and the device number B storing region 94 of the record 91-1.

The IP address managing unit 86 shown in Fig. 10 has the capabilities of the above described DHCP message interpreting unit 8, DHCP message creating unit 9, and address determining unit 10, and is configured by comprising the MAC address/IP address corresponding/storing unit 11 for storing the address management table 20 shown in Fig. 4.

Operations of the IP address obtaining apparatus 83 are described next.

Firstly, the IP address obtaining apparatus 83 passively and actively obtains the IP addresses of the image outputting devices 81 and 82 stored in the MAC address/IP address corresponding/storing unit 11. Operation of the IP address obtaining apparatus 83 when the IP addresses of the image outputting devices 81 and 82 are passively obtained are the same as those represented by the flowchart shown in Fig. 5. Therefore, their explanations are omitted here. Besides, operations of the IP address obtaining apparatus 83 when the IP addresses of the image outputting devices 81 and 82 are actively obtained are the same as those represented by the flowchart shown in Fig. 8. Therefore, their explanations are omitted here.

If the IP address obtaining apparatus 83 attempts to make the image projecting device 81-1 perform a specific operation such as an operation for making the image projecting device 81-1 project a test pattern for calibration, the apparatus extracts the MAC address corresponding to the image projecting device number "1" of the image projecting device 81-1 from the image projecting device management table 90 shown in Fig. 11, also extracts the IP address corresponding to the extracted MAC address from the address management table 20 shown in Fig. 4, establishes a communication with the image outputting device 81 connected to the image projecting device 81-1 with the use of the extracted IP address, and transmits an instruction and an image to the image outputting device 81 by using TCP/IP. Then, the image outputting device 81 makes the image projecting device 81-1 project the received image based on the received instruction.

Thus, the operator of the IP address obtaining apparatus 83 can make an intended image projecting device project an intended image without being conscious of the wiring connecting the image outputting devices 81 and 82 to the image projecting devices 81-1, 81-2, 82-1, and 82-2, and the operation, which is performed by the DHCP server 3, for assigning IP addresses to the image outputting devices 81 and 82.

The above described preferred embodiment refers to the case where the IP address obtaining system 1 is applied to the multi-projection system 80. However, a system to which the IP address obtaining system 1 is applied is not particularly limited as far as the system is implemented as a system where one network appliance communicates with one or more network appliances in an environment where a communication is made by using TCP/IP.

Additionally, the IP address obtaining apparatuses 4 and 83 according to the above described preferred embodiments may be configured by comprising a CPU, a main storage, a hard disk device, a network connecting device such as a modem, a LAN adapter, etc., a portable storage medium such as a CD, a DVD, an optical disk, a flexible disk, etc., a medium reading device, an input processing unit, and a display device, which are interconnected by a bus. In this case, the medium reading device reads a program and data stored onto the portable storage medium, and loads the program and the data into the main storage or the hard disk device. The CPU loads the program and the data into the main storage and executes the program, whereby the above described passive or active IP address obtaining method is implemented as a program in a software manner.

Additionally, in the IP address obtaining apparatuses 4 and 83, application software is sometimes exchanged by using a storage medium. Accordingly, the present invention can be configured as a computer-readable storage medium for causing a computer to perform the processes referred to in the above described preferred embodiments.

Examples of the storage medium include a portable storage medium such as a CD-ROM, a flexible disk, an MO, a DVD, a removable magnetic disk, etc., which can be inserted/ejected into/from a medium driving device, a storage device which is contents of which are transmitted via a network line and which is possessed by an external information provider, a memory (RAM or an external storage device) within an information processing device, a hard disk device, a small memory card such as a USB memory, a flash memory, etc. A program stored onto such a portable storage medium, a storage device or the like is loaded into the memory and executed, whereby the above described passive or active IP address obtaining method is implemented.

According to the present invention, an IP address can be obtained at high speed, and a load on a network can be reduced without using protocols other than DHCP.

## Claims

1. An IP address obtaining method in a network system (1) where a DHCP server (3) dynamically assigns an IP address to a network appliance (2) via a network (5), comprising:
receiving a request message which is transmitted from the network appliance (2) to the DHCP server (3) and stores an IP address desired to be used;
extracting the IP address and a MAC address from the request message; and
associating a MAC address of a network appliance (2) to be examined with the IP address extracted from the request message and storing the MAC address and the IP address, if the extracted MAC address is the MAC address of the network appliance (2) to be examined.

2. An IP address obtaining method in a network system (1) where an application message indicating that an IP address is desired to be obtained is transmitted from a network appliance (2) to a DHCP server (3) via a network (5), a notification message storing an assignable IP address is transmitted from the DHCP server (3) to the network appliance (2), a request message storing an IP address desired to be used is transmitted from the network appliance (2) to the DHCP server (3), a response message indicating the permission/prohibition of the use of the IP address is transmitted from the DHCP server (3) to the network appliance (2), whereby the IP address is dynamically assigned to the network appliance (2), comprising:
receiving the request message;
extracting the IP address and a MAC address from the request message; and
associating a prestored MAC address with the IP address extracted from the request message and storing the MAC address and the IP address in an address management table (20), if the extracted MAC address matches the MAC address presorted in the address management table (20).

3. An IP address obtaining method in a network system (1) where a DHCP server (3) dynamically assigns an IP address to a network appliance (2) via a network (5), comprising:
storing a MAC address of a network appliance (2) to be examined in an application message indicating that an IP address is desired to be obtained, and transmitting the application message to the DHCP server (3);
receiving from the DHCP server (3) a notification message storing an assigned IP address or an assignable IP address;
extracting the assigned IP address or the assignable IP address from the notification message; and
associating the MAC address of the network appliance (2) to be examined with the IP address extracted from the notification message, and storing the MAC address and the IP address.

4. An IP address obtaining method in a network system (1) where an application message indicating that an IP address is desired to be obtained is transmitted from a network appliance (2) to a DHCP server (3) via a network (5), a notification message storing an assigned IP address or an assignable IP address is transmitted from the DHCP server (3) to the network appliance (2), a request message storing an IP address desired to be used is transmitted from the network appliance (2) to the DHCP server (3), a response message indicating the permission/prohibition of the use of the IP address is transmitted from the DHCP server (3) to the network appliance (2), whereby the IP address is dynamically assigned to the network appliance (2), comprising:
storing a MAC address prestored in an address management table (20) in the application message, and transmitting the application message to the DHCP server (3);
receiving from the DHCP server (3) the notification message in response to the application message;
extracting the assigned IP address or the assignable IP address from the notification message; and
associating the prestored MAC address with the IP address extracted from the notification message, and storing the MAC address and the IP address in the address management table (20).

5. The IP address obtaining method according to claim 1, further comprising:
storing the MAC address of the network appliance (2) to be examined in an application message indicating that an IP address is desired to be obtained and transmitting the application message to the DHCP server (3), if an IP address stored in correspondence with the MAC address of the network appliance (2) to be examined is not updated;
receiving from the DHCP server (3) a notification message storing an assigned IP address or an assignable IP address;
extracting the assigned IP address or the assignable IP address from the notification message; and
associating the MAC address of the network appliance (2) to be examined with the IP address extracted from the notification message, and storing the MAC address and the IP address.

6. The IP address obtaining method according to claim 2, further comprising:
storing the prestored MAC address in the application message and transmitting the application message to the DHCP server (3), if the IP address stored in correspondence with the prestored MAC address is not updated;
receiving the notification message in response to the application message;
extracting the assigned IP address or the assignable IP address from the notification message; and
associating the prestored MAC address with the IP address extracted from the notification message, and storing the MAC address and the IP address in the address management table (20).

7. The IP address obtaining method according to any one of claims 3 through 6, further comprising:
setting a broadcast flag stored in the application message to ON when transmitting the application message to the DHCP server (3); and
receiving the notification message broadcast from the DHCP server (3).

8. An IP address obtaining apparatus (4) comprised in a network system (1) where a DHCP server (3) dynamically assigns an IP address to a network appliance (2) via a network (5), comprising:
a receiving unit (6) for receiving a request message which is transmitted from the network appliance (2) to the DHCP server (3) and stores an IP address desired to be used;
an extracting unit (10) for extracting the IP address and a MAC address from the request message; and
an address storing unit (11) for associating a MAC address of a network appliance (2) to be examined with the IP address extracted from the request message and for storing the MAC address and the IP address, if the extracted MAC address is the MAC address of the network appliance (2) to be examined.

9. An IP address obtaining apparatus (4) comprised in a network system (1) where a DHCP server (3) dynamically assigns an IP address to a network appliance (2) via a network (5), comprising:
a transmitting unit (7) for storing a MAC address of a network appliance (2) to be examined in an application message indicating that an IP address is desired to be obtained, and for transmitting the application message to the DHCP server (3);
a receiving unit (6) for receiving from the DHCP server (3) a notification message storing an assigned IP address or an assignable IP address;
an extracting unit (10) for extracting the assigned IP address or the assignable IP address from the notification message; and
an address storing unit (11) for associating the MAC address of the network appliance (2) to be examined with the IP address extracted from the notification message, and for storing the MAC address and the IP address.

10. An IP address obtaining system (80) having a DHCP server (3) for dynamically assigning an IP address to a network appliance (81 or 82) via a network (5), and an IP address obtaining apparatus (83) connected to the network (5), the IP address obtaining apparatus (83) comprising:
a receiving unit (6) for receiving a request message which is transmitted from the network appliance (81 or 82) to the DHCP server (3) and stores an IP address desired to be used;
an extracting unit (10) for extracting the IP address and a MAC address from the request message;
an address storing unit (11) for associating a MAC address of a network appliance (81 or 82) to be examined with the IP address extracted from the request message and for storing the MAC address and the IP address, if the extracted MAC address is the MAC address of the network appliance (81 or 82) to be examined; and
an identification information storing unit (85) for associating the MAC address of the network appliance (81 or 82) to be examined with identification information for identifying a plurality of devices (81-1, 81-2, 82-1, 82-2) connected to the network appliance (81 or 82) to be examined, and for storing the MAC address and the identification information, wherein
if a predetermined device among the plurality of devices (81-1, 81-2, 82-1, 82-2) is made to perform an operation, a MAC address corresponding to identification information of the predetermined device is extracted from said identification information storing unit (85), an IP address stored in correspondence with the extracted MAC address is extracted from said address storing unit (11), and a communication with the network device (81 or 82) connected to the predetermined device is established based on the extracted IP address.

11. An IP address obtaining system (80) having a DHCP server (3) for dynamically assigning an IP address to a network appliance (81 or 82) via a network (5), and an IP address obtaining apparatus (83) connected to the network (5), the IP address obtaining apparatus (83) comprising:
a transmitting unit (7) for storing a MAC address of a network appliance (81 or 82) to be examined in an application message indicating that an IP address is desired to be obtained, and for transmitting the application message to the DHCP server (3);
a receiving unit (6) for receiving from the DHCP server (3) a notification message storing an assigned IP address or an assignable IP address;
an extracting unit (10) for extracting the assigned IP address or the assignable IP address from the notification message;
an address storing unit (11) for associating the MAC address of the network appliance (81 or 82) to be examined with the IP address extracted from the notification message, and for storing the MAC address and the IP address; and
an identification information storing unit (85) for associating the MAC address of the network appliance (81 or 82) to be examined with identification information for identifying a plurality of devices (81-1, 81-2, 82-1, 82-2) connected to the network appliance (81 or 82) to be examined, and for storing the MAC address and the identification information, wherein
if a predetermined device among the plurality of devices (81-1, 81-2, 82-1, 82-2) is made to perform an operation, a MAC address corresponding to identification information of the predetermined device is extracted from said identification information storing unit (85), an IP address stored in correspondence with the extracted MAC address is extracted from said address storing unit (11), and a communication with the network appliance (81 or 82) connected to the predetermined device is established based on the extracted IP address.

12. The IP address obtaining system (80) according to claim 10 or 11, wherein the plurality of devices (81-1, 81-2, 82-1, 82-2) are image projecting devices or image displaying devices.

13. A computer-readable storage medium on which is recorded a program that enables a computer to function, in order to obtain an IP address in a network system (1) where a DHCP server (3) dynamically assigns an IP address to a network appliance (2) via a network (5), as:
means (6) for receiving a request message which is transmitted from the network appliance (2) to the DHCP server (3) and stores an IP address desired to be used;
means (10) for extracting the IP address and a MAC address from the request message; and
means (11) for associating a MAC address of a network appliance (2) to be examined with the IP address extracted from the request message and for storing the MAC address and the IP address, if the extracted MAC address is the MAC address of the network appliance (2) to be examined.

14. A computer-readable storage medium on which is recorded a program that enables a computer to function, in order to obtain an IP address in a network system (1) where a DHCP server (3) dynamically assigns an IP address to a network appliance (2) via a network (5), as:
means (7) for storing a MAC address of a network appliance (2) to be examined in an application message indicating that an IP address is desired to be obtained, and for transmitting the application message to the DHCP server (3);
means (6) for receiving from the DHCP server (3) a notification message storing an assigned IP address or an assignable IP address;
means (10) for extracting the assigned IP address or the assignable IP address from the notification message; and
means (11) for associating the MAC address of the network appliance (2) to be examined with the IP address extracted from the notification message, and for storing the MAC address and the IP address.

15. A program which enables a computer to function, in order to obtain an IP address in a network system (1) where a DHCP server (3) dynamically assigns an IP address to a network appliance (2) via a network (5), as:
means (6) for receiving a request message which is transmitted from the network appliance (2) to the DHCP server (3) and stores an IP address desired to be used;
means (10) for extracting the IP address and a MAC address from the request message; and
means (11) for associating a MAC address of a network appliance (2) to be examined with the IP address extracted from the request message and for storing the MAC address and the IP address, if the extracted MAC address is the MAC address of the network appliance (2) to be examined,.

16. A program which enables a computer to function, in order to obtain an IP address in a network system (1) where a DHCP server (3) dynamically assigns an IP address to a network appliance (2) via a network (5), as:
means (7) for storing a MAC address of a network appliance (2) to be examined in an application message indicating that an IP address is desired to be obtained, and for transmitting the application message to the DHCP server (3);
means (6) for receiving from the DHCP server (3) a notification message storing an assigned IP address or an assignable IP address;
means (10) for extracting the assigned IP address or the assignable IP address from the notification message; and
means (11) for associating the MAC address of the network appliance (2) to be examined with the IP address extracted from the notification message, and
for storing the MAC address and the IP address.
